# EUROPÄISCHE PATENTSCHRIFT

(11) **EP 2 729 854 B1**
(45) Veröffentlichungstag und Bekanntmachung des Hinweises auf die Patenterteilung: **02.11.2016**
(21) Anmeldenummer: 11767411.9
(22) Anmeldetag: 29.09.2011
(51) Int. Cl.: G05B 19/045, G05B 19/418

(54) **VERFAHREN ZUR ERMITTLUNG VON KOMPONENTENPARAMETERN UND VORRICHTUNG**
METHOD FOR DETERMINING COMPONENT PARAMETERS AND DEVICE
PROCÉDÉ DE DÉTERMINATION DE PARAMÈTRES RELATIFS À DES COMPOSANTS ET DISPOSITIF ASSOCIÉ

(43) Veröffentlichungstag der Anmeldung: 14.05.2014
(73) Patentinhaber: Siemens Aktiengesellschaft, 80333 München (DE)
(72) Erfinder: FÖRTSCH, Rainer, 91077 Kleinsendelbach (DE); GRAF, Rene, 90513 Zirndorf (DE); KONOPKA, Frank, 90518 Altdorf (DE); PESCHKE, Jörn, 90489 Nürnberg (DE)
(86) Internationale Anmeldenummer: PCT/EP2011/067006
(87) Internationale Veröffentlichungsnummer: WO 2013/044963

(56) Entgegenhaltungen:
- WO-A1-2010/034333
- US-A1- 2007 213 864
- JOSE LUIZ BITTENCOURT ET AL: "Energy efficiency improvement through context sensitive self-learning of machine availability", INDUSTRIAL INFORMATICS (INDIN), 2011 9TH IEEE INTERNATIONAL CONFERENCE ON, IEEE, 26. Juli 2011 (2011-07-26), Seiten 93-98, XP031972706, DOI: 10.1109/INDIN.2011.6034843 ISBN: 978-1-4577-0435-2
- W. Schöfberger: "Abschaltbare Fabrik, Zentrale Leittechnik und Gesamtkonzept zu Energieeinsparungen und zur Ressourcenoptimierung im Standby Betrieb von Industrieanlagen", Berichte aus Energie- und Umweltforschung, Bd. 72 9. Februar 2010 (2010-02-09), XP002680212, Gefunden im Internet: URL:http://www.nachhaltigwirtschaften.at/f dz_pdf/endbericht_1072_abschaltbare_fabrik .pdf [gefunden am 2012-07-17]
- Robert Schmitt ET AL: "Modelling Machine Tools for Self-Optimisation of Energy Consumption" In: "Glocalized Solutions for Sustainability in Manufacturing", 19 March 2011 (2011-03-19), Springer-Verlag Berlin Heidelberg, XP055263244, ISBN: 978-3-642-19692-8 pages 253-256,

## Beschreibung

Industrielle Anlagen, auch Automatisierungsanlagen genannt, werden zur automatisierten Herstellung von Produkten und zur automatisierten Durchführung von Prozessen verwendet. Sie setzen sich, abhängig von den Anforderungen an die Anlage, aus sehr vielen kleinen und großen Komponenten zusammen. In diesen Komponenten werden die unterschiedlichsten Funktionalitäten, beispielsweise das Messen, Steuern, Regeln, die Bedienung der Komponenten über Schnittstellen und die Kommunikation zwischen den Komponenten und den Schnittstellen realisiert. Bei den Komponenten kann es sich um einzelne Maschinen, Fördereinheiten oder ganze Fertigungszellen mit innerer Struktur handeln. Zwischen diesen Komponenten bestehen auch Abhängigkeiten, die beispielsweise vorschreiben, dass eine bestimmte Komponente erst ein- oder abgeschaltet werden kann, wenn eine oder mehrere andere Komponenten sich in einem definierten Zustand befinden.

Das Hoch- oder Runterfahren einer solchen komplexen Anlage ist ein Prozess, der sich zum einen über einen langen Zeitraum erstreckt und manuell erfolgt, weil das Zusammenspiel der Komponenten zu komplex ist, um eine Ablaufsequenz explizit zu programmieren.

Diese Umstände haben zur Folge, dass in Stillstandszeiten dieser Anlage die einzelnen Komponenten zwar nichts produzieren, aber sich dennoch in betriebsbereitem Zustand befindet, so dass nach wie vor ein erheblicher Energieverbrauch zu verzeichnen ist. Beispielhafte Untersuchungen bei Automobilproduzenten haben gezeigt, dass der Energieverbrauch einer nicht produzierenden Anlage bis zu 60% gegenüber einer Anlage im produzierenden Betrieb liegt. Hier gibt es ein sehr großes Einsparpotential.

Darüber hinaus ist meist nicht bekannt, welche Komponenten in welchen Zuständen wie viel Energie verbrauchen und welche Zeiten für Zustandswechsel benötigt werden. Damit fehlt eine Voraussetzung, um beurteilen zu können, ob es sinnvoll ist bestimmte Teile der Anlage, z. B. während kurzer Pausen, abzuschalten.

Auch ein Schalten in energiesparende Zustände, z. B. Standby, wird heute nicht vorgenommen, da solche Zustände in der Anlage nicht vorgesehen und implementiert sind. Darüber hinaus würde auch ein Schalten in solche Zustände die Kenntnis über die Abhängigkeiten in der Anlage erfordern.

### Stand der Technik

Es gibt bislang keine technische Lösung für dieses Problem. Die Inbetriebnahme einer Anlage erfolgt manuell durch erfahrenes Personal. Das Ausschalten und Einschalten von Produktionsanlagen nach der ersten Inbetriebnahme wird heute meist unterlassen, da für die manuelle Durchführung der Schaltvorgänge der einzelnen Komponenten besonderes Personal mit sehr detailliertem Wissen über die Abhängigkeiten der unterschiedlichen Komponenten untereinander und wie diese zu synchronisieren sind, notwendig ist. Wenn überhaupt, werden Anlagen nur in langen Nichtproduktivzeiten, zum Beispiel in Werksferien abgeschaltet. Das Wiedereinschalten der Anlage dauert dann teilweise viele Stunden und kann nur von einigen wenigen Personen durchgeführt werden.

Auch die in einer Anlage verbauten Komponenten, also Maschinen, Linien oder Zellen, unterstützen zwar heute ein mehr oder weniger standardisiertes Zustandsmodell (z. B. OMAC, Organization for Machine Automation and Control, für Verpackungsmaschinen), jedoch sind hierbei weder Energiesparzustände (z. B. Standby) berücksichtigt, noch bieten die Komponenten nach außen eine Schnittstelle, mit der sie in solche energiesparenden Zustände geschalten werden können.

Des Weiteren berücksichtigen Komponentenlieferanten (z. B. Maschinenbauer, Anlagenbauer) heute Energiesparzustände im Betrieb oder im Nichtbetrieb noch nicht. Doch selbst wenn sie dieses tun würden, so würden sie die notwendigen Zustände implizit in die Steuerungen der Komponenten einbauen und zum Aufruf eine proprietäre Schnittstelle verwenden.

Heute ist im Regelfall nicht bekannt, wie hoch der Energieverbrauch der einzelnen Komponenten in unterschiedlichen Zuständen tatsächlich ist. Auch die Kenntnis über das Zeitverhalten der Komponenten, d. h. wie viel Zeit benötigt ein möglichen Zustandswechsel einer Komponente, ist nicht vorhanden. Eine wesentliche Voraussetzung für eine Automatisierung von Schaltvorgängen (z.B. um Energie zu sparen) ist die Kenntnis
- des Energieverbrauchs je Zustand und Zustandsübergang je Komponente und
- der Zeit, die für den Zustandsübergang benötigt wird.
Diese Werte können heute nur mit großem manuellem Aufwand ermittelt werden; es fehlt eine technische Lösung zur automatischen Ermittlung dieser Werte.

Das Dokument US 2007/213864 A1 betrifft eine Anlage im Bereich der Halbleiterfertigung, bei der die Anlagen-Komponenten in bestimmte Stromspar-Zustände gebracht werden können. Die jeweils notwendige Zeit um in einen Stromspar-Zustand bzw. in einen Normal-Zustand zu wechseln , werden ermittelt und gespeichert und anschließend bei der Steuerung der Übergänge zwischen Stromspar-Zustand und Normal-Zustand der Gesamtanlage angewendet. In der beschriebenen Anlage werden im Wesentlichen die Daten durch Beobachtung der Anlage im Betrieb ermittelt und daraus extrapoliert.

Das Dokument XP031972706, Jose Luiz Bittencourt ET AL: "Energy efficiency improvement through context sensitive self-learning of machine availability", offenbart ein Produktionssystem, welches eine Referenz -Architektur besitzt, in der man u. a. ein "Learning ModuIe" findet. Mit Hilfe eines Context Model und einer Ontologie werden gewonnene Roh-Daten ausgewertet und situationsabhängig gespeichert. Ziel des Verfahrens ist der energieeffiziente Einsatz der Produktionsanlage durch Reduzierung des Energieverbrauchs während unvermeidbarer Idle-Zeiten. Die dauerhafte Überwachung der Situation führt dazu, dass ein zukünftiger Einsatz der Anlage vorhergesagt werden kann. Muster werden erkannt und Hochfahr-Zeiten von Anlagen-Teilen können berücksichtigt werden.

Das Dokument XP055263244, Robert Schmitt ET AL: "Modelling Machine Tools for Self-Optimisation of Energy Consumption" offenbart ein Verfahren zur Selbstoptimierung des Energieverbrauchs von Werkzeugmaschinen, wobei der der Werkzeugmaschinensteuerung zugrundeliegende Zustandsautomat für die energetisch relevanten Komponenten jeweils die zugehörigen Zeit- und Energieverbrauch bei den Übergängen zwischen Stromspar-Zustand und Normal-Zustand enthält und bei der Steuerung der Schlafmodus-Strategie der gesamten Werkzeugmaschine zur Optimierung des Energieverbrauchs berücksichtigt.

Es ist Aufgabe der Erfindung, für die oben genannten Probleme eine Lösung anzugeben und eine Vorrichtung sowie ein Verfahren anzugeben, welches eine automatisierte Ermittlung von Komponentenparametern ermöglicht.

Die Aufgabe wird gelöst durch ein Verfahren gemäß Patentanspruch 1 und durch eine Vorrichtung zur Durchführung des Verfahrens gemäß Patentanspruch 9.

Das erfindungsgemäße Verfahren ermittelt Komponentenparameter in einer Anlage oder eines Teils einer Anlage die aus Anlagenkomponenten besteht. Die Komponenten können tatsächliche energetische oder funktionale Zustände einnehmen, gesteuert über eine Schnittstelle durch eine Steuervorrichtung. Die Steuerung steuert dabei eine Anlagenkomponente automatisiert in einen definierten Zustand, misst den gesuchten Werte und übermittelt den ermittelten Messwert an die Steuervorrichtung. Die Steuervorrichtung verfügt dabei über Informationen in Form eines Struktur-Modells der Anlage und erzeugt die Schaltbefehle zur Steuerung der Anlage gemäß des Struktur-Modells.

Weitere vorteilhafte Ausführungsformen sind in den Unteransprüchen angegeben.

Das erfindungsgemäße Verfahren kann dabei vorteilhafterweise die betroffene Komponente zur Ermittlung der gesuchten Parameter systematisch in jeden möglichen Komponentenzustand zumindest einmal steuern. Jede Komponente kann mehrere unterschiedliche Zustände besitzen (z. B. ausgeschaltet, verschieden Standby-Zustände, verschiedene Synchronisationszustände, Betriebsbereit, Betriebsfreigabe u.v.m.).
Die Komponente kann dabei zumindest einen der folgenden tatsächlichen Zustände einnehmen:
- Eingeschaltet,
- Ausgeschaltet,
- Ruhezustand,
- Teillast,
- Volllast,
- Leerlauf.

Das erfindungsgemäße Verfahren kann vorteilhafterweise auch eine Messung in der Anlage gleichzeitig an mehreren Anlagenkomponenten durchführen. Die so ermittelten Energiewerte stellen dann eine Summe der Einzelwerte da und können durch geschickte Kombination der Messszenarien leicht berechnet werden.

An die Steuervorrichtung können ein oder mehrere Messgeräte angeschlossen werden, die den Energieverbrauch der Komponenten messen können. Jedes Messgerät muss dabei in der Lage sein, den Anteil bestimmter Komponenten am Gesamtenergieverbrauch eindeutig bestimmen zu können.

Die Leistungsaufnahme eine Komponente kann dabei während eines Zustands gemessen werden. Erfindungsgemäß wird der Lastverlauf der Leistungsaufnahme einer Komponente über einen definierten Zeitraum gemessen, während sich die Komponente in dem Zustand befindet.

Während eines Zustandswechsels einer Komponente kann weiterhin zumindest einer der folgenden Werte gemessen werden: die Leistungsaufnahme eine Komponente während eines Zustandswechsels, den Lastverlauf während des Zustandswechsels, oder die Zeit, die die Komponente benötigt um den angesteuerten Zustand einzunehmen.

Die Messung des Komponentenparameters erfolgt vorteilhafterweise während einer zuvor definierten Abfolge von Zustandswechseln, auch synthetischer Betriebsszenarien genannt.

Die so durch die Messung ermittelten Komponentenparameter werden vorteilhafterweise im Modell der Anlage gespeichert und sind so für die Berechnung von Steuerungsbefehlen durch die Steuerung verwendbar.

Eine Messung kann auch wiederholt durchgeführt werden zur Ermittlung weiterer Informationen über die Komponente, insbesondere zur Durchführung einer Fehlererkennung, einer Zustandserkennung, oder zur Erhöhung der Messgenauigkeit.

In einer Steuer-Vorrichtung zur energieffizienten Steuerung einer Anlage ist es möglich, die Komponenten der Anlage, mögliche Zustände und Zustandsübergänge je Komponente und die Abhängigkeiten untereinander zu definieren und zu speichern. Die Vorrichtung kommuniziert über eine Schnittstelle mit der Anlage; d. h. mit den Komponenten, die zu der Anlage gehören. Über diese Schnittstellen zu den Komponenten ist es möglich, die jeweiligen Komponenten in unterschiedliche Zustände zu versetzen. Jede Komponente kann mehrere unterschiedliche Zustände besitzen (z. B. ausgeschaltet, verschiedene Standby-Zustände, verschiedene Synchronisationszustände, Betriebsbereit, Betriebsfreigabe).
Eine Steuerung der Anlage erfolgt dann mit Hilfe und auf Grund der durch das erfindungsgemäße Verfahren ermittelten Werte.

Die Steuer-Vorrichtung kommuniziert über eine Schnittstelle mit der zu steuernden Anlage; d.h. mit den Komponenten, die zu der Anlage gehören. Über die Schnittstellen zu den Komponenten ist es möglich, die jeweiligen Komponenten in unterschiedliche Zustände zu versetzen.

An die Steuer-Vorrichtung können ein oder mehrere Messgeräte angeschlossen werden, die den Energieverbrauch der Komponenten messen können. Jedes Messgerät muss dabei in der Lage sein, den Anteil bestimmter Komponenten am Gesamtenergieverbrauch eindeutig bestimmen zu können.

Die Steuer-Vorrichtung muss daher in der Lage sein, durch das erfindungsgemäße Verfahren, bestimmte Werte einer Anlage, wie z. B. je Komponente die Leistungsaufnahme in verschiedenen Zuständen, den Lastverlauf der jeweiligen Zustandsübergänge sowie deren benötigte Zeit automatisch zu ermitteln. Dies wird dadurch erreicht, dass unter Berücksichtigung der Abhängigkeiten der verschiedenen Komponenten untereinander die Komponenten automatisch und systematisch in alle möglichen Zustände geführt und die jeweiligen Werte (wie z. B. Leistungsaufnahme, Lastverlauf, Zeit) ermittelt werden. Wird eine temporäre Erfassung mit mobiler Messtechnik durchgeführt, können aus der Analyse der Abhängigkeiten auch die für eine eindeutige Bestimmung von Werten mindestens erforderliche Anzahl und Position von Messeinrichtungen abgeleitet werden.

Durch die automatische Ermittlung der Werte entfällt eine manuelle Erfassung, die mit erheblichem Aufwand und einer gewissen Fehleranfälligkeit verbunden ist. Aufgrund des geringen Zeitaufwands können diese automatischen Durchläufe auch mehrfach durchgeführt werden.

Diese Ermittlung kann vorrangig mit dem Ziel der Parametrierung einer Steuer-Vorrichtung durchgeführt werden oder auch häufiger, um zusätzliche Informationen über die Anlage zu erhalten, wie z.B. Min- und Max-Werte, Streuverhalten, Mittelwerte, Erwartungswert. Aus längerfristigen Erfassungen von Werten können dann auch untypische Abweichungen erkannt und z. B. für Zwecke der Zustandsüberwachung weiterverwendet werden.
Abhängig vom zeitlichen Auflösungsvermögen der Messgeräte ist es auch möglich, den zeitlichen Verlauf des Energieverbrauchs z. B. für Zustandsübergänge zu ermitteln. Dies kann bei bestimmten Komponenten (z B. Motoren) sehr wichtig sein, da Verbrauchspitzen auftreten können. Deren genaue Kenntnis kann für Optimierungen sehr wichtig sein.

Im Folgenden wird das Verfahren weiter beschrieben. Es schafft auch die Voraussetzung um die Komponenten einer Anlage, die möglichen Zustände und Zustandsübergänge je Anlagen-Komponente und die logischen Abhängigkeiten untereinander zu definieren und zu speichern. Unter logischen Abhängigkeiten wird dabei im Folgenden verstanden, dass ein Schaltvorgang zumindest einer Anlagen-Komponente weitere Zustände anderer Anlagen-Komponenten voraussetzt, um eine Anlage oder einen Anlagenteil geordnet zu steuern.

Für die Zustände und Zustandsübergänge werden durch das erfindungsgemäße Verfahren weitere Informationen angelegt, die später zur Schaltung hilfreich oder gar notwendig sind. Diese Informationen umfassen z. B. die Leistungsaufnahmen in den einzelnen Komponenten-Zuständen, sowie die Zeiten und die Lastverläufe für jeweilige Zustandsübergänge in den Komponenten.

Durch Kenntnis der Abhängigkeiten zwischen den Komponenten der Anlage ist es der Vorrichtung möglich, jede Komponente in ihre verschiedenen Zustände zu schalten. Damit kann auch die Anlage in vordefinierte Gesamtzustände (setzen sich zusammen aus Kombinationen der Zustände der Komponenten) geschaltet werden. Hiermit kann nicht nur die Anlage automatisch ein- und ausgeschaltet werden, sondern es können auch definierte energiesparende Zustände im Nichtproduktivbetrieb, sogenannte Standby-Zustände, sowie energiesparende Zustände im Produktivbetrieb, z. B. Teillastbetrieb, angefahren werden.

Die Werte für diese Informationen werden durch das erfindungsgemäße Verfahren ermittelt, vorteilhafterweise auch durch permanentes Ermitteln zur Laufzeit, und damit gegebenenfalls notwendiges Nachjustieren der Werte in den Einstellungen möglich ist.

Die vorliegende Erfindung wird nun anhand der beigefügten Zeichnungen näher erläutert, in denen zeigen:
- FIG 1: eine Übersicht über die erfindungsgemäße Vorrichtung mit Schnittstellen,
- FIG 2: ein System mit Teilanlage
- FIG 3: ein zu Figur 2 analoges System nach dem Stand der Technik,
- FIG 4: eine System bei Ermittlung von Komponentenparametern,
- FIG 5: ein beispielhaftes Anlagen- und Zustandsmodell,
- FIG 6: ein beispielhaftes Zustandsmodell,
- FIG 7: ein Zustandmodell mit Abhängigkeiten,
- FIG 8: eine beispielhafte Anlage,
- FIG 9: die Anlage aus Fig 7 mit erfindungsgemäßen Modellen,
- FIG 10: eine beispielhafte Anlage mit mehreren Energieschaltcontrollern.

Die Vorrichtung zur Steuerung, im Folgenden auch Energieschaltcontroller genannt, erlaubt es, eine Anlage oder Anlagenteile automatisch in verschiedene Betriebs- und Nichtbetriebszustände zu schalten, sowohl für die Anlage als Ganzes als auch für ihre einzelnen Komponenten. Da der Energieschaltcontroller auch durch das erfindungsgemäße Verfahren Informationen über die Schaltzeiten der einzelnen Zustandsübergänge, sowie den Energieverbrauch in Zuständen und Zustandsübergängen hat, ist es ihm möglich, auch komplexe Anfragen so zu verarbeiten, dass die Anlage in die energetisch günstigsten Zustände geht und dabei sichergestellt ist, dass sie bei Bedarf auch wieder verfügbar ist. So enthält der Energieschaltcontroller in seiner Schnittstelle nach oben (also zu übergeordneten Systemen) unter Anderem folgende Funktionen:
- Schalte die Anlage/einen Anlagenteil zu einer vorbestimmten Uhrzeit für eine bestimmte Zeit in den energetisch günstigsten Zustand, beispielsweise jede Nacht oder am Wochenende.
- Schalte die Anlage/einen Anlagenteil in den energetisch günstigsten Zustand, in dem jedoch sichergestellt ist, dass die Anlage binnen einer bestimmten Zeit wieder in den Produktivbetrieb geschalten werden kann, beispielsweise während einer Produktionspause.
- Schalte die Anlage/einen Anlagenteil in einem Zustand (produktiv oder nicht-produktiv), in dem sie einen bestimmten Energieverbrauch nicht überschreitet.
- Schalte die Anlage / einen Anlagenteil ab oder ein, bei zeitlich variabler Nichtnutzung, insbesondere auch bei ungeplanten Ereignissen wie Störungen, Materialengpässen oder bei Nichtverfügbarkeit von Ressourcen. Das Auftreten und die Dauer einer solchen Situation ist häufig nicht genau vorherzusehen, anzugeben oder kann erst zu einem späteren Zeitpunkt präzisiert werden.

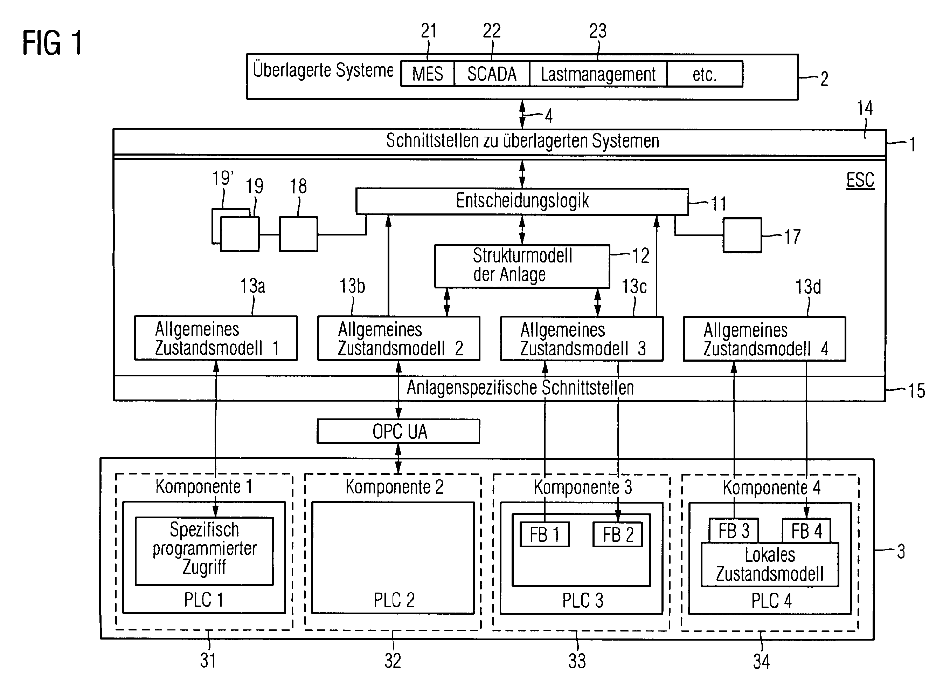

Figur 1 zeigt eine Übersicht über eine Anlage mit Steuerungsvorrichtung, 1. Dargestellt sind die generischen Funktionen der eigentlichen Steuerung, Entscheidungslogik, die die Berechnung ihrer Steuerungsbefehle basiert auf dem Aufbau der zu steuernden Anlagen(teile), Strukturmodell der Anlage, und dem oder den Zustandsdefinition der jeweiligen Bestandteile, Allgemeines Zustandsmodell 1-4. Durch das erfindungsgemäße Verfahren liegen der Steuerungsvorrichtung weitere Informationen vor über Zustandsübergänge, 17, Abhängigkeiten, 18, und weitere Informationen zu den Status-Übergängen, 19, 19'.

Die Steuervorrichtung, Energieschaltcontroller ESC, 1, kann durch viele andere Systeme genutzt werden. Hierfür weist er eine geeignete Schnittstelle zu überlagerten Systemen auf, 14.

Ein paar mögliche Beispiele für solche Systeme sind:
- Ein Produktsplanungssystem, 21, und ein MES-System wissen über Pausenzeiten und Betriebsruhen Bescheid. Sie nutzen den Energieschaltcontroller, 1, um für die bekannten Pausen in den energetisch besten Zustand zu schalten und gleichzeitig sicherzustellen, dass die Anlage wieder verfügbar ist, wenn sie wieder benötigt wird.
- Ein Störungsmanagement weiß, dass durch die Störung eines Anlagenteils andere Anlagenteile zurzeit nicht mehr benötigt werden, da sie z. B. keine Teile mehr geliefert bekommen. Nun kann das Störungsmanagement mithilfe des Energieschaltcontrollers diese nicht benötigten Anlagenteile in einen energiesparenden Standby-Zustand schicken. Voraussichtlich muss dabei sichergestellt werden, dass die Anlagenteile in einer bestimmten Zeit "wiedererweckt", also in den Produktivbetrieb zurückgeschaltet werden können.
- Ein Lastmanagementsystem, 23, oder zukünftig auch ein Demand-Response-Controller mit Verbindung zu einem Smart Grid, sollen zur Lastspitzenregelung Teile der Anlage ab- oder in Standby-Zustände schalten können.

Hierzu können diese Systeme zuerst durch den Energieschaltcontroller 1 ermitteln, in welchen Zuständen und mit welcher Leistungsaufnahme die Anlage und ihre Komponenten aktuell laufen. Außerdem kann er ermitteln, in welche Zustände (produktiv oder nicht-produktiv) sich die einzelnen Komponenten schalten lassen. Mit Hilfe von Vorgaben (die natürlich auch die vom Energieschaltcontroller ermittelbaren Abhängigkeiten berücksichtigen) kann das Lastmanagementsystem nun den Energieschaltcontroller auffordern, die Gesamtanlage oder Teile davon in energiesparende Zustände (produktiv oder nichtproduktiv) zu fahren.
- Ein Materialführungssystem weiß, dass durch unterschiedliche Geschwindigkeiten und Puffer in der Anlage, oder durch redundante Anlagenteile manche Anlagenteile nur zeitweise verwendet werden. Da es auch weiß, wann und wie lange diese Anlagenteile verwendet werden bzw. nicht verwendet werden, können solche Teile (müssen natürlich als Komponenten im Energieschaltcontroller modelliert sein) über den Energieschaltcontroller für die Zeit der Nichtverwendung in den energetisch günstigsten Zustand geschalten werden. Auch könnten solche Anlagenteile in Teilbetriebszustände, z. B. langsamere Produkten, geschalten werden.

Eine entsprechende Steuerung der betroffenen Anlagen / Anlagenteile / Komponenten 31, 32, 33, 34 erfolgt über anlagenspezifische Schnittstellen, 15. Spezifische Anpassungen sind erforderlich. Die Anbindung der Komponenten ist auf verschiedene Art und Weise möglich, beispielhaft sind hier vier verschiedene Möglichkeiten dargestellt:
- mittels spezifischem programmierten Zugriff auf die PLC1 Komponente
- über ein standardisiertes Kommunikationsprotokoll OPC UA
- mit direktem Zugriff - Funktionsblock
- zusätzlich zum allgemeinen Zustandsmodell kann auch noch ein lokales Zustandsmodell auf der Komponente, PLC4, hinterlegt sein.

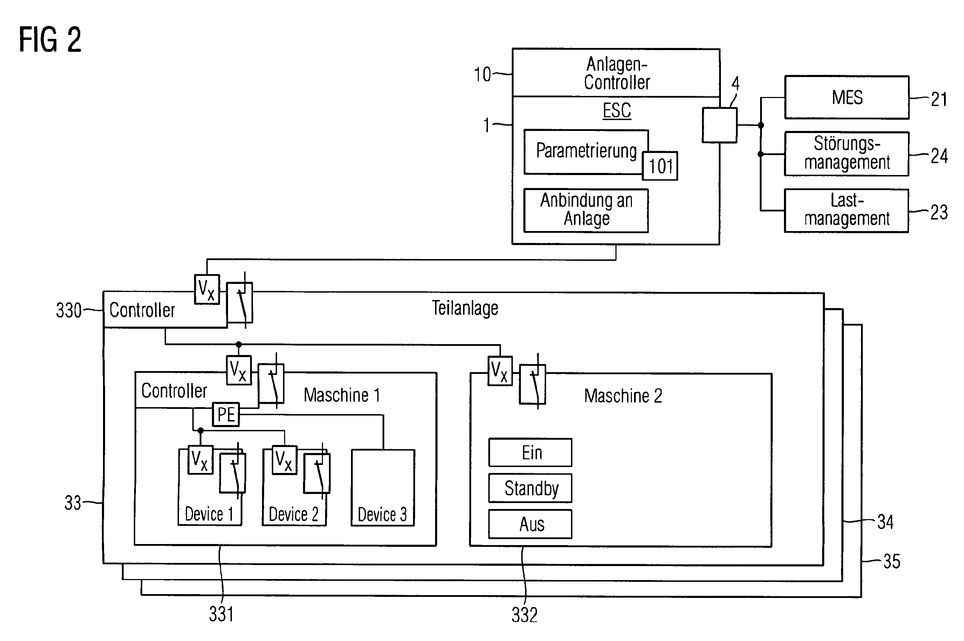

FIG 2 stellt ein System mit Teilanlage dar. Als weiterer Vorteil kann die standardisierte Schnittstelle von Ab-/und Zuschaltfunktion auf Controllerebene (beispielsweise über eine ProfiEnergy Schnittstelle Vx) angesehen werden. Die Parametrierung des Energy-Schalt-Controllers ESC, wie weiter unten beschrieben, führt dazu, dass bei Veränderung der Gegebenheiten in der Anlage das Programm selber nicht oder nur minimal geändert werden muss, sondern lediglich die Parametrierung, also die Definitionen der Modelldefinitionen der Anlage und / oder der Komponenten und oder der Zustände und Zustandsübergänge der Anlage/Anlagenteile. Dort, 101, wird unter anderem das Monitoring und die Parametrierung durchgeführt. Weiterhin wird hier jede Änderung, die beispielsweise bei einem Geräteaustausch erforderlich ist, eingegeben, sowie eine mögliche Handbedienung.

Über die Schnittstelle, 4, kann eine Kommunikation zu den übergeordneten Systemen erfolgen, soweit vorhanden: Beispielsweise zu dem MES 21, bezüglich Pausen, Betriebsruhen und Fertigungsplänen, das Störungsmanagement 24, und das Lastmanagement 23 zur Abschaltung bei Lastspitzen.

In der einen dargestellten Komponente, Maschine2, ist beispielhaft ein Energiezustandsmodell 332 eingezeichnet. Dieses ist in der Komponente bereits enthalten.

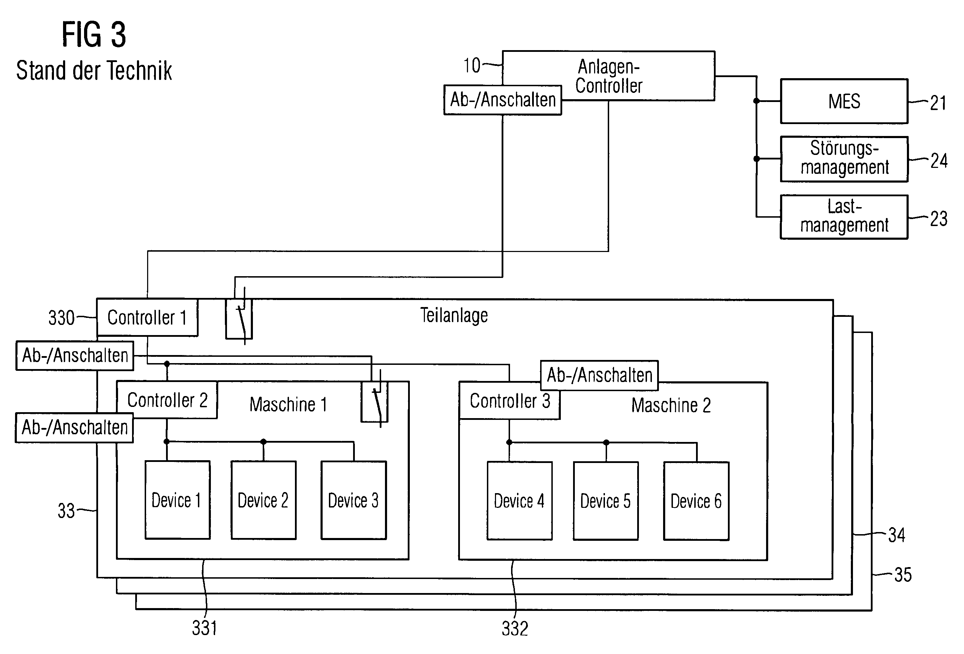

Figur 3 zeigt ein zu Figur 2 analoges System nach dem Stand der Technik, welches eine Unterstützung / Implementierung der Ab-/Zuschaltlogik nach dem Stand der Technik darstellt. Diese ist bei den jeweiligen Anlagencontrollern oder in den Controllern der Teilanlagen untergebracht, An-/Abschalten. Nachteilig bei dieser Lösung, welche auch über proprietäre Schnittstellen verfügt, ist, dass die Realisierung in der Regel anlagenspezifisch geschieht, also mit jeder neuen Anlage oder Änderung in einer bestehenden Anlage eine neue Realisierung umgesetzt werden muss und weist also geringe Flexibilität bei Änderungen oder Erweiterungen auf.
Es ist auch nur eine sehr grobe Einschätzung des Energiebedarfs über die gesamte Anlage möglich, spätere Änderungen und neuere Messergebnisse können nicht mehr oder nur mit sehr großem Aufwand berücksichtigt werden.

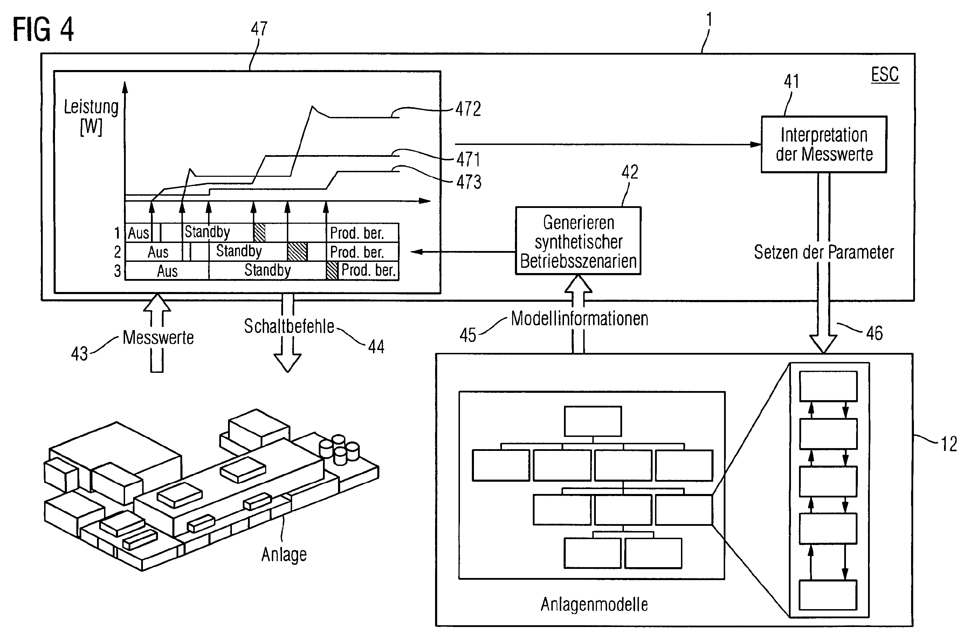

In der Figur 4 ist nun dargestellt, wie das erfindungsgemäße Verfahren die Ermittlung der von der Steuervorrichtung 1 benötigten Informationen zum Stromverbrauch der in der Anlage, Anlage, enthaltenen Komponenten, 31, 32, 33, 34 durchführt. Ausgehend von dem in der Steuervorrichtung enthaltenen Wissen über die Anlage, Anlagenmodelle, also über die Zusammensetzung der Komponenten, Zustandsmodelle, Abhängigkeiten zwischen Komponenten und dergleichen, Modellinformationen 45, werden geeignete Betriebsszenarien generiert, Generieren synthetischer Betriebsszenarien 42. Die Steuervorrichtung erzeugt dann für die zu messende Komponente oder Komponenten in der Anlage, Anlage, geeignete Schaltbefehle, 44. Beim Durchlaufen der Betriebsszenarien werden dann die gewünschten Messwerte, 43, ermittelt und an die Steuervorrichtung, 1, zurück übertragen. Gegebenenfalls werden sie auch in eine aussagefähige Grafik umgesetzt, 47. Hier ist beispielhaft dargestellt, wie 3 Komponenten ein Betriebsszenario durchlaufen, welches hintereinander und für die drei Komponenten jeweils zeitversetzt die Komponentenzustände AUS, STANDBY, PRODUKTIONSBEREIT, durchschaltet. Auf der Darstellung ist auf der X-Achse der Zeitablauf und auf der Y-Achse die so gemessene Leistungsaufnahme (W) dargestellt, und die 3 Messkurven 471, 472 und 473 aufgetragen. Die jeweilige Steigerung der Leistungsaufnahme, gegebenenfalls sogar mit Leistungsspitzen in der Kurve, sind dabei korreliert zu der jeweiligen Zustandsänderung. Die so gemessenen Werte werden dann ausgewertet, 41 und in das Anlagenmodell oder die Komponenteninformation mit aufgenommen, 46. Insbesondere das Zustandsmodell wird im Weiteren ausgeführt.

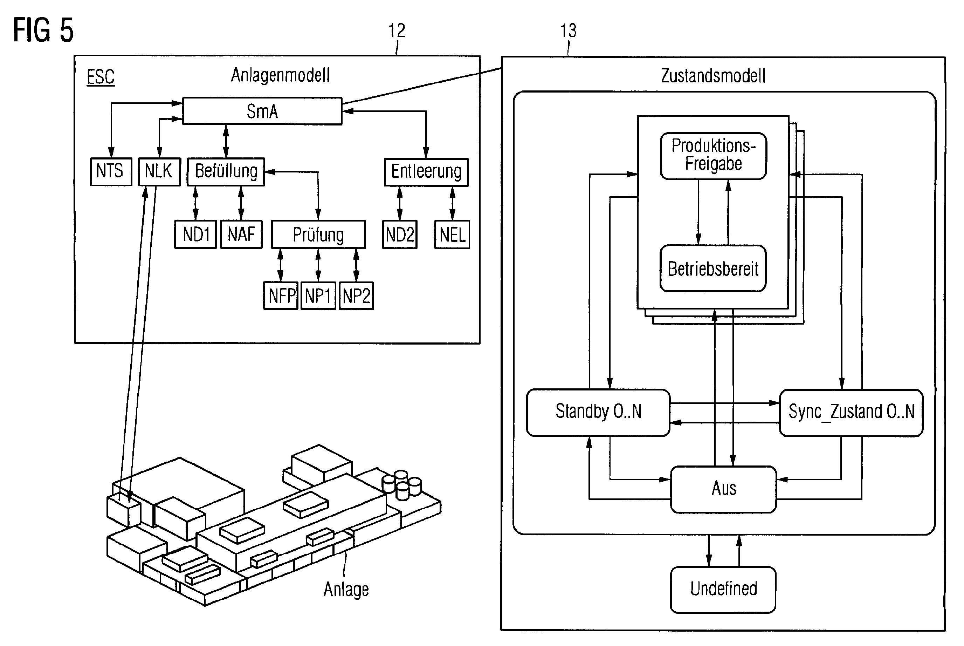

Die Figur 5 zeigt ein beispielhaftes Anlagen- 12 und Zustandsmodell 13. Dabei handelt es sich um eine Testanlage, in der Kleinteile in Flaschen gefüllt, die Flaschen auf richtigen Inhalt überprüft und dann wieder geleert werden.
Das Anlagenmodell beschreibt dabei die zahlreichen Teilkomponenten inklusive den Abhängigkeiten, die im Folgenden kurz aufgezählt werden:
TS - **T**ransport**s**ystem
LK - Lager / Kommisionierung
D1 Ver**d**eckelungsstation
D2 - Ent**d**eckelungsstation
AF - **A**b**f**üllstation
EL - **E**nt**l**eerungsstation
FP- **F**laschen**p**icker
P1/2 - **P**rüfstation 1 und 2.

Das Zustandsmodell der Anlage ist daneben angezeigt, es ist als Graph dargestellt, mit den beispielhaften Zuständen AUS, Betriebsbereit, Produktionsfreigabe, Standby, Sync Zustand und Undefined. Mit Pfeilen sind dabei die möglichen Zustands-Übergänge angezeigt, der Zustand Betriebsbereit ist mehrfach vorhanden, für jeden Anlagenteil.

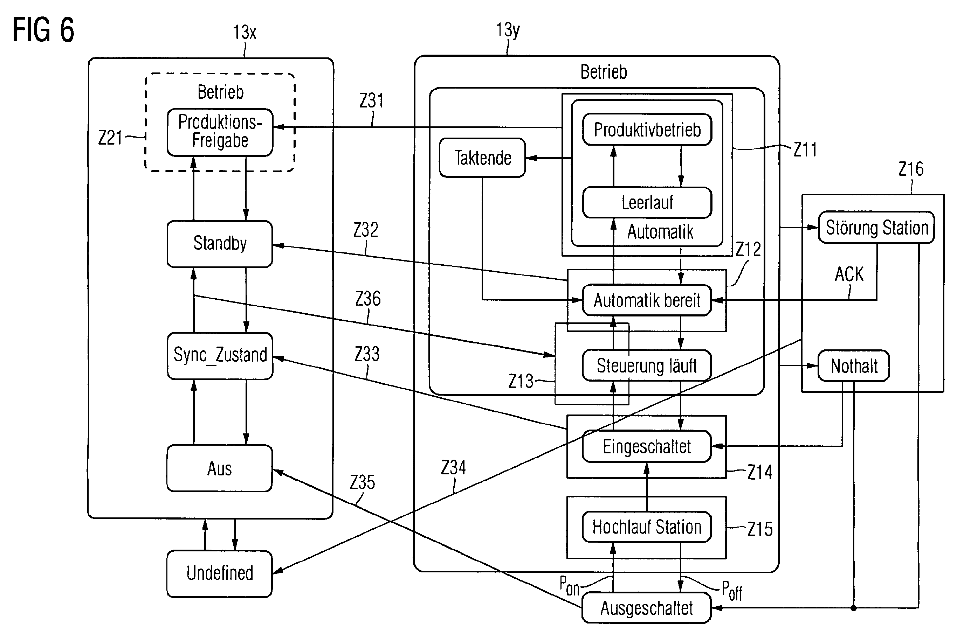

Die Verbindung von dem Modell zur Anlage geschieht wie folgt: Zunächst wird der Zustand ausgelesen. Die realen Zustandsinformationen werden auf Zustände im Modell abgebildet. Dies ist in Figur 6 näher erläutert.

In einem zweiten Schritt wird der Zustand dann geändert: nur bei Zustandsänderungen im Modell ist ein Schalten in der realen Anlage erforderlich.

Basierend auf dieser Beispielanlage ist nun in Figur 6 ein Zustandsmodell aufgezeigt. Auf der rechten Seite 13y sind die Zustände der realen Komponente dargestellt, welche jedoch für die Verwendung für den Energiesparcontroller vorteilhafterweise noch vereinfacht werden, zu dem vereinfachten Zustandsmodell 13x.
Auf der linken Seite ist eine spezielle Ausprägung des allgemeinen Zustandsmodells zu sehen, dass der Vorrichtung zur energieeffizienten Steuerung einer Anlage benötigt.

Auf der rechten Seite ist das spezifische Zustandsmodell einer Station einer Anlage dargestellt.

Nun können mittels graphischer Verknüpfungen ein oder mehrere Zustände aus dem spezifischen Modell mit dem Energieschalt-Zustandsmodell verknüpft werden.

Das Energieschalt-Zustandsmodell ist immer eine Untermenge eines spezifischen Zustandsmodells, wobei für die Abbildung die folgenden Fälle unterschieden werden können:
- Es gibt eine 1:1 Abbildung zwischen den Modellen, d. h. ein Zustand im spezifischen Zustandsmodell entspricht genau einem Zustand im allgemeinen Zustandsmodell. (dies ist z. B. typisch für den Zustand AUS)
- Mehrere Zustände im spezifischen Modell werden zu einem Zustand im allgemeinen Zustandsmodell zusammengefasst. Dies ist z. B. typisch für verschiedene Fehlerzustände, die im allgemeinen Zustandsmodell durch den einheitlichen Zustand UNDEFINED repräsentiert werden, da eine feinere Unterscheidung für die Funktion eines Energieschaltcontrollers nicht notwendig ist.
- Zustände im spezifischen Modell werden nicht abgebildet, wenn sie aus energetischer Sicht nicht relevant (z. B. in Bezug auf ein mögliches Einsparpotential) sind und auch keine Abhängigkeitsbeziehungen zu anderen Zuständen aufweisen. Im Energieschalt-Zustandsmodell sind diese speziellen Zustände nicht als Zustände repräsentiert, da sie nicht direkt angesteuert werden, sondern immer nur im Rahmen eines Übergangs von einem Zustand des allgemeinen Zustandsmodell in einen anderen durchlaufen werden.

Welche Zustände im allgemeinen Zustandsmodell sinnvoll sind, kann anhand von Regeln bestimmt werden, so dass eine automatisierte Ableitung bzw. die Erstellung eines Vorschlages für die Abbildung möglich ist. Dies trifft insbesondere auf sinnvolle Standby-Zustände zu, die einer bestimmten energetischen und zeitlichen (in Bezug auf die Zeit zum Erreichen und wieder Verlassen des Zustandes) Ordnung unterliegen.

Es werden in dem Beispiel die beiden Zustände Produktivbetrieb und Leerlauf zusammengefasst, z31, zu einem Sammelzustand Betrieb, der den Zustand Produktionsfreigabe enthält.
Manche Zustände werden unverändert übernommen, beispielsweise "Automatik bereit" der im Modell als Standby bezeichnet wird, Z32, oder AUSGESCHALTET, welche im anderen Modell mit AUS bezeichnet ist, z35. Im realen Anlagenmodell können auch mehrere Einzelzustände wiederum zusammengefasst werden, beispielsweise STÖRUNG STATION und NOTHALT.

Der Zustand AUS beschreibt dabei das niedrigste Energieniveau, aus dem das System wieder eingeschaltet werden kann. Dagegen bezeichnet UNDEFINED alle Systemzustände, aus denen nicht mehr automatisch geschaltet werden darf. Die STANDBY Zustände zeichnen sich durch eine geringere Leistungsaufnahme als im Betriebszustand aus.

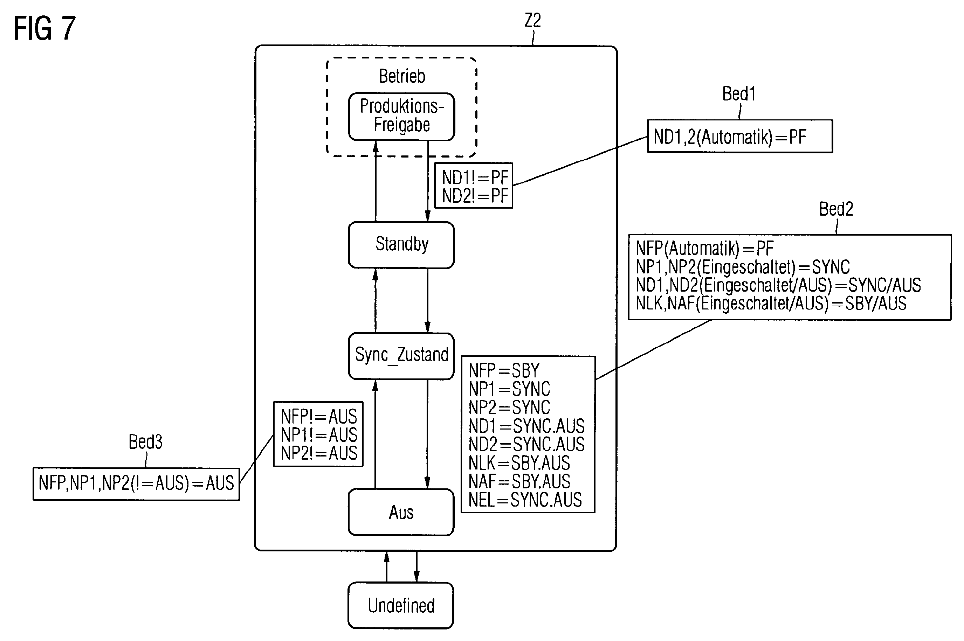

In Figur 7 ist das Zustandmodell 13x aus Figur 6 ausgeführt für den Anlagenteil Transportsystem TS, Z2, mit ergänzenden Voraussetzungen und Abhängigkeiten versehen. Bedingung 1, Bed1 beschreibt einen Übergang von AUTOMATIK nach AUTOMATIK BEREIT der Verdeckelungs- bzw. Entdeckelungsstation. Bedingung 2, Bed2, legt unter anderem fest, in welchem Zustand die Anlagenkomponenten sein müssen, bevor die Anlagenkomponente Transportsystem TS ausgeschaltet werden darf. Umgekehrt legt Bedingung 3, Bed3, fest, welche Stationen wieder eingeschaltet sein müssen, bevor das Transportsystem wieder eingeschaltet werden darf.

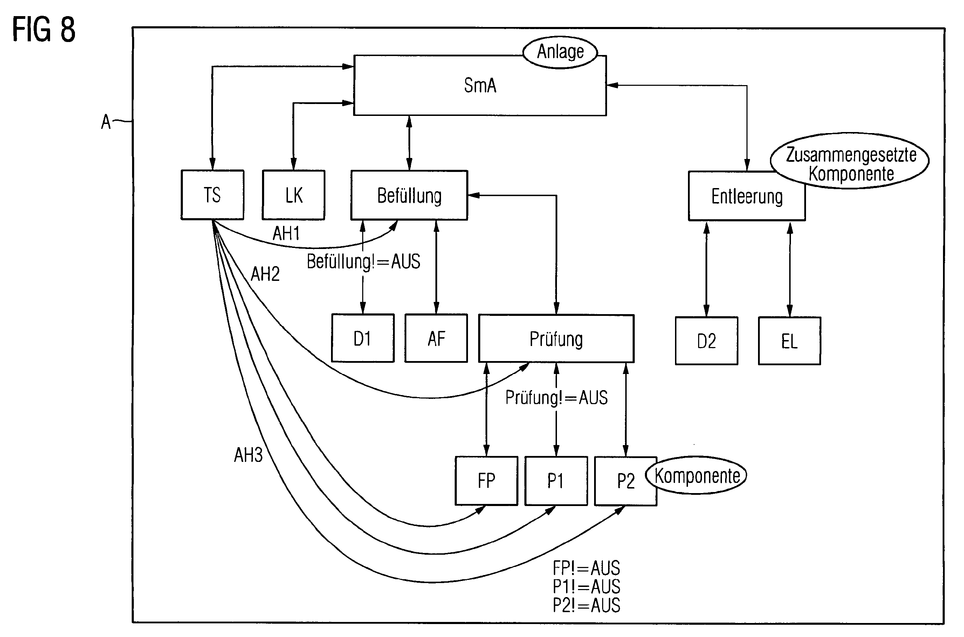

In Figur 8 ist für die beispielhafte Anlage eine mögliche Aggregierung von Komponenten der Anlage in Teilanlagen dargestellt. Es sind dabei mehrstufige Hierarchien möglich, Abhängigkeiten können über mehrere Ebenen vererbt werden.

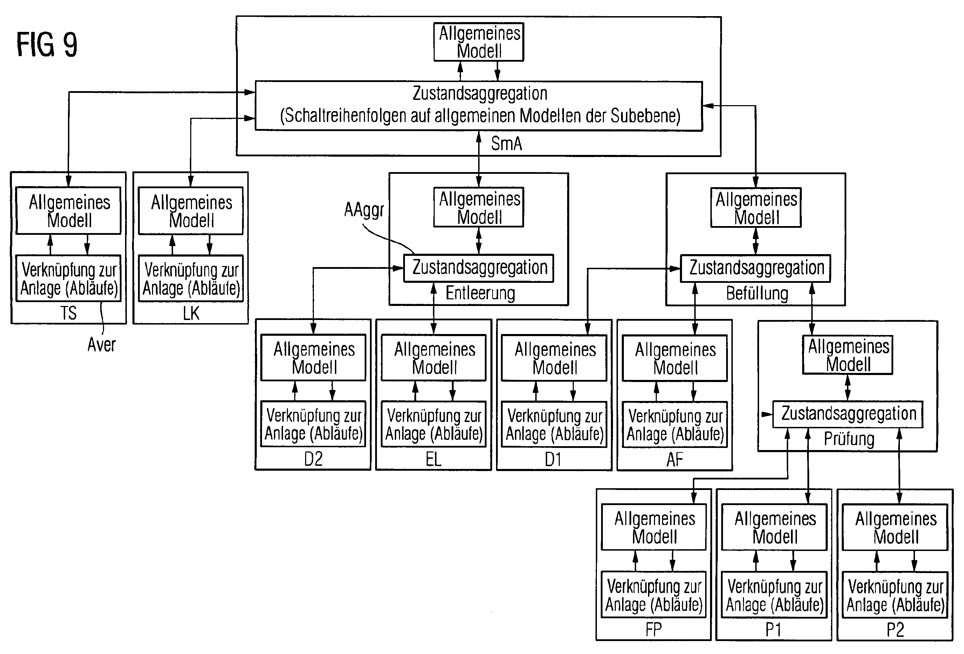

Figur 9 zeigt die Anlage aus Figur 8 mit erfindungsgemäßen Zustandsmodellen insbesondere für Aggregatkomponenten.

Die allgemeinen Modelle werden mit Abläufen und Zugriffen in der Anlage verknüpft, AVer. Zustandsaggregationen zeigen Schaltreihenfolgen auf allgemeinen Modellen der Subebene(n). Es können nach Bedarf einfache Regeln gebildet werden, beispielsweise: "Wenn alle unterlagerten Komponenten den Zustand AUS eingenommen haben, dann ist die aggregierte Komponente ebenfalls im Zustand AUS. Auch komplexere Entscheidungen sind möglich, so dass eine Kombination von ausgewählten Zuständen in den Einzelkomponenten einen STANDBY Zustand in der aggregierten Komponente ergeben. Auch bei aggregierten Komponenten können die jeweiligen Abhängigkeiten und Zustandsänderungsbedingungen festgelegt werden. Entsprechende Definitionen können dem Bedien-Personal bei der Festlegung gegebenenfalls mit Unterstützung durch ein geeignetes Werkzeug zur Auswahl angeboten werden.

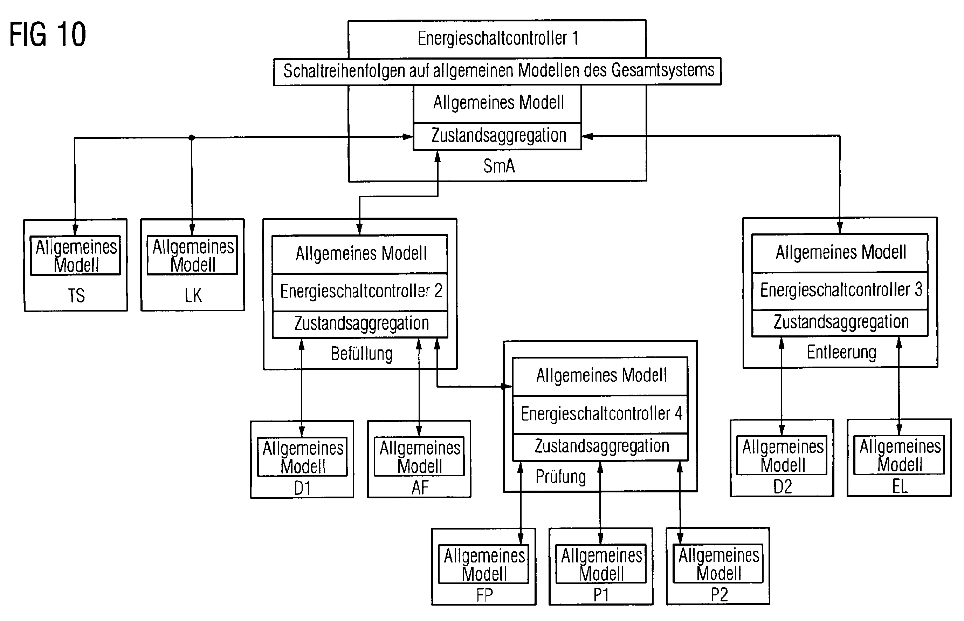

Damit der Energieschaltcontroller immer den Überblick über die Abhängigkeiten der Komponenten einer Anlage haben muss, um diese koordiniert schalten zu können, ist es notwendig, dass er sich in der Hierarchie der Komponenten jeweils hoch genug befindet. Wohl aber ist es möglich, Teile einer Anlage (z. B. eine Maschine oder eine Linie), die für sich relativ autark funktionieren - also nur geringe Abhängigkeiten zu anderen Komponenten außerhalb haben - mit einem eigenen Energieschaltcontroller auszustatten, der dann wiederum über seine eigene Schnittstelle von einem übergeordneten Energieschaltcontroller verwendet werden kann. Hierdurch ist auch eine hierarchische Staffelung von Energieschaltcontrollern möglich, siehe Figur 10.

### Bezugszeichenliste

- ESC: Energieschaltcontroller
- FB: Funktionsblock
- MES: Manufacturing Execution System
- AF: Abfüllstation
- D1: Verdeckelungsstation
- D2: Entdeckelungsstation
- EL: Entleerungsstation
- FP: Flaschenpicker
- LK: Lager / Kommissionierung
- Px: Prüfstation
- TS: Transportsystem
- OPC UA OPC: Unified Architecture
- PLC: Programmable Logic Controller, Speicherprogrammierbare Steuerung
- SCADA: Supervisory Control and Data Acquisition

## Patentansprüche

1. Verfahren zur Ermittlung von Komponentenparametern in einer Anlage (Anlage) oder eines Teils einer Anlage, bestehend aus Anlagenkomponenten (31, 32, 33, 34), wobei die Komponenten tatsächliche energetischen oder funktionalen Zustände gesteuert über eine Schnittstelle (15) durch eine Steuervorrichtung (1) einnehmen können, wobei die Steuerung eine Anlagenkomponente (31, 32, 33, 34) automatisiert in einen definierten Zustand steuert (44), wobei die Komponente zur Ermittlung der Parameter systematisch in jeden möglichen tatsächlichen Zustand gesteuert wird,
eine Messung des gesuchten Wertes erfolgt, und
der ermittelte Messwert von der Steuervorrichtung (1) empfanden wird (43) wobei
die Steuervorrichtung (1) über Informationen in Form eines Modell der Anlage (12) verfügt und
die Schaltbefehle (44) gemäß dem Modell (12) erzeugt **dadurch gekennzeichnet, dass**
der Lastverlauf der Leistungsaufnahme einer Komponente (31, 32, 33, 34) gemessen wird über einen definierten Zeitraum während sich die Komponente in dem Zustand befindet.

2. Verfahren zur Ermittlung von Komponentenparametern in einer Anlage (Anlage) gemäß Patentanspruch 1,
**dadurch gekennzeichnet, dass**
die tatsächlichen einnehmbaren Zustände umfassen:
- Eingeschaltet (BETRIEB)
- Ausgeschaltet (AUS)
- Ruhezustand (AUTOMATIK BEREIT)
- Teillast
- Volllast (PRODUKTIVBETRIEB)
- Leerlauf (LEERLAUF).

3. Verfahren zur Ermittlung von Komponentenparametern in einer Anlage (Anlage) gemäß einem der vorherigen Patentansprüche,
**dadurch gekennzeichnet, dass**
eine Messung in der Anlage (Anlage) gleichzeitig mehrere Anlagenkomponenten (31, 32, 33, 34) erfasst.

4. Verfahren zur Ermittlung von Komponentenparametern in einer Anlage (Anlage) gemäß einem der vorherigen Patentansprüche,
**dadurch gekennzeichnet, dass**
die Leistungsaufnahme eine Komponente (31, 32, 33, 34) während eines Zustands gemessen wird.

5. Verfahren zur Ermittlung von Komponentenparametern in einer Anlage (Anlage) gemäß einem der vorherigen Patentansprüche,
**dadurch gekennzeichnet, dass**
zumindest einer der folgenden Werte gemessen wird, während die Komponente (31, 32, 33, 34) einen Zustandswechsel durchführt:
- die Leistungsaufnahme eine Komponente während eines Zustandswechsels,
- den Lastverlauf während des Zustandswechsels,
- die Zeit, die die Komponente benötigt um den angesteuerten Zustand einzunehmen.

6. Verfahren zur Ermittlung von Komponentenparametern in einer Anlage (Anlage) gemäß einem der vorherigen Patentansprüche,
**dadurch gekennzeichnet, dass**
die Messung des Komponentenparameters erfolgt während einer zuvor definierten Abfolge von Zustandswechseln (42, Generieren synthetischer Betriebsszenarien).

7. Verfahren zur Ermittlung von Komponentenparametern in einer Anlage (Anlage) gemäß einem der vorherigen Patentansprüche,
**dadurch gekennzeichnet, dass**
die durch die Messung ermittelten Komponentenparameter (43) im Modell der Anlage (12) gespeichert und für die Berechnung von Steuerungsbefehlen durch die Steuerung (1) verwendbar sind.

8. Verfahren zur Ermittlung von Komponentenparametern in einer Anlage (Anlage) gemäß einem der vorherigen Patentansprüche,
**dadurch gekennzeichnet, dass**
eine Messung wiederholt durchgeführt wird zur Ermittlung weiterer Informationen über die Komponente, insbesondere zur Durchführung einer Fehlererkennung, einer Zustandserkennung, oder zur Erhöhung der Messgenauigkeit.

9. Vorrichtung zur Ermittlung von Komponentenparametern in einer Anlage
**dadurch gekennzeichnet, dass**
sie ein Verfahren gemäß einem der Patentansprüche 1 bis 8 durchführt.

## Claims

1. Method for determining component parameters in an installation (Anlage), or a part of an installation, consisting of installation components (31, 32, 33, 34), the components being able to adopt actual energy or functional states under the control of a control apparatus (1) via an interface (15), the controller controlling (44) an installation component (31, 32, 33, 34) into a defined state in an automated manner, the component being systematically controlled into each possible actual state in order to determine the parameters,
the value sought being measured, and
the determined measured value being received (43) by the control apparatus (1),
the control apparatus (1) having information in the form of a model (12) of the installation and
generating the switching commands (44) according to the model (12),
**characterized in that**
the load profile of the power consumption of a component (31, 32, 33, 34) is measured over a defined period during which the component is in the state.

2. Method for determining component parameters in an installation (Anlage) according to Patent Claim 1, **characterized in that**
the actual states which can be adopted comprise:
- switched on (BETRIEB)
- switched off (AUS)
- quiescent state (AUTOMATIK BEREIT)
- partial load
- full load (PRODUKTIVBETRIEB)
- idling (LEERLAUF).

3. Method for determining component parameters in an installation (Anlage) according to one of the preceding patent claims,
**characterized in that**
a measurement in the installation (installation) simultaneously senses a plurality of installation components (31, 32, 33, 34).

4. Method for determining component parameters in an installation (Anlage) according to one of the preceding patent claims,
**characterized in that**
the power consumption of a component (31, 32, 33, 34) during a state is measured.

5. Method for determining component parameters in an installation (Anlage) according to one of the preceding patent claims,
**characterized in that**
at least one of the following values is measured while the component (31, 32, 33, 34) carries out a state change:
- the power consumption of a component during a state change,
- the load profile during the state change,
- the time needed by the component to adopt the controlled state.

6. Method for determining component parameters in an installation (Anlage) according to one of the preceding patent claims,
**characterized in that**
the component parameter is measured during a predefined sequence of state changes (42, generation of artificial operating scenarios).

7. Method for determining component parameters in an installation (Anlage) according to one of the preceding patent claims,
**characterized in that**
the component parameters (43) determined by the measurement are stored in the model (12) of the installation and can be used by the controller (1) to calculate control commands.

8. Method for determining component parameters in an installation (Anlage) according to one of the preceding patent claims,
**characterized in that**
a measurement is carried out repeatedly in order to determine further information relating to the component, in particular in order to carry out fault detection, state detection or to increase the measurement accuracy.

9. Apparatus for determining component parameters in an installation,
**characterized in that**
it carries out a method according to one of Patent Claims 1 to 8.

## Revendications

1. Procédé de détermination de paramètres relatifs à des composants dans une installation (Anlage) ou une partie d'une installation, constituée de composants d'installation (31, 32, 33, 34), dans lequel les composants peuvent prendre des états effectifs énergétiques ou fonctionnels sous la commande d'un dispositif de commande (1) par l'intermédiaire d'une interface (15), dans lequel la commande active (44) un composant d'installation (31, 32, 33, 34) de façon automatisée dans un état défini, dans lequel on active le composant pour la détermination des paramètres systématiquement dans chaque état effectif possible, on effectue une mesure de la valeur recherchée, et la valeur de mesure déterminée est reçue (43) par le dispositif de commande (1), dans lequel le dispositif de commande (1) dispose d'informations sous la forme d'un modèle de l'installation (12) et produit les instructions de commutation (44) selon le modèle (12), **caractérisé en ce que** l'on mesure l'allure de charge de la consommation de puissance d'un composant (31, 32, 33, 34) sur une période de temps définie pendant que le composant se trouve dans l'état.

2. Procédé de détermination de paramètres relatifs à des composants dans une installation (Anlage) selon la revendication 1, **caractérisé en ce que** les états effectifs réalisables comprennent:
- connecté (BETRIEB)
- déconnecté (AUS)
- repos (AUTOMATIK BEREIT)
- charge partielle
- pleine charge (PRODUKTIVBETRIEB)
- ralenti (LEERLAUF).

3. Procédé de détermination de paramètres relatifs à des composants dans une installation (Anlage) selon une des revendications précédentes, **caractérisé en ce qu'**une mesure dans l'installation (Anlage) détecte en même temps plusieurs composants de l'installation (31, 32, 33, 34).

4. Procédé de détermination de paramètres relatifs à des composants dans une installation (Anlage) selon l'une quelconque des revendications précédentes, **caractérisé en ce que** l'on mesure la consommation de puissance d'un composant (31, 32, 33, 34) pendant un état.

5. Procédé de détermination de paramètres relatifs à des composants dans une installation (Anlage) selon l'une quelconque des revendications précédentes, **caractérisé en ce que** l'on mesure au moins une des valeurs suivantes, pendant que le composant (31, 32, 33, 34) opère un changement d'état:
- la consommation de puissance d'un composant pendant un changement d'état;
- l'allure de la charge pendant le changement d'état;
- le temps dont le composant a besoin pour prendre l'état activé.

6. Procédé de détermination de paramètres relatifs à des composants dans une installation (Anlage) selon l'une quelconque des revendications précédentes, **caractérisé en ce que** l'on effectue la mesure du paramètre relatif au composant pendant une succession définie au préalable de changements d'état (42, générer des scénarios de fonctionnement synthétiques).

7. Procédé de détermination de paramètres relatifs à des composants dans une installation (Anlage) selon l'une quelconque des revendications précédentes, **caractérisé en ce que** les paramètres relatifs à des composants déterminés par la mesure (43) sont mémorisés dans le modèle de l'installation (12) et ils sont utilisables pour le calcul d'instructions de commande par la commande (1).

8. Procédé de détermination de paramètres relatifs à des composants dans une installation (Anlage) selon l'une quelconque des revendications précédentes, **caractérisé en ce que** l'on effectue une mesure de façon répétée pour la détermination d'autres informations relatives aux composants, en particulier pour l'exécution d'une détection de défaut, d'une détection d'état ou pour l'augmentation de la précision de mesure.

9. Dispositif de détermination de paramètres relatifs à des composants dans une installation, **caractérisé en ce qu'**il exécute un procédé selon l'une quelconque des revendications 1 à 8.
